**Europäisches Patentamt**

**European Patent Office**

**Office européen des brevets**

(11) Veröffentlichungsnummer : **0 190 394**
**B1**

(12) **EUROPÄISCHE PATENTSCHRIFT**

(45) Veröffentlichungstag der Patentschrift :
26.04.89

(51) Int. Cl.⁴ : **F 23 J 11/00**

(21) Anmeldenummer : 85110306.9

(22) Anmeldetag : 17.08.85

(54) Installationseinheit mit einem Abgasrohr und einem Frischluftrohr.

(30) Priorität : 18.09.84 DE 3434194
05.06.85 DE 3520130

(43) Veröffentlichungstag der Anmeldung :
13.08.86 Patentblatt 86/33

(45) Bekanntmachung des Hinweises auf die Patenterteilung : 26.04.89 Patentblatt 89/17

(84) Benannte Vertragsstaaten :
AT DE FR GB IT

(56) Entgegenhaltungen :
DE-A- 2 023 925
DE-A- 3 244 502

(73) Patentinhaber : ROBERT BOSCH GMBH
Postfach 50
D-7000 Stuttgart 1 (DE)

(72) Erfinder : Schmid, Josef, Ing. grad.
Max-Eyth-Strasse 43
D-7317 Wendlingen (DE)
Erfinder : Kehl, Albin, Dr. Dipl.-Phys
Im Viehtrieb 16
D-7253 Renningen 2 (DE)
Erfinder : Schmuker, Franz, Dipl.-Ing. (TH)
Frühlingstrasse 29
D-7321 Wangen (DE)
Erfinder : Leukert, Gerhard, Dipl.-Ing. (FH)
Panoramastrasse 90
D-7310 Plochingen (DE)
Erfinder : Kohl, Walter
Schwalbenweg 40
D-7064 Remshalden (DE)
Erfinder : Sauer, Christian, Dipl.-Ing. (BA)
Stauffenbergstrasse 3
D-7120 Bietigheim (DE)

EP 0 190 394 B1

## Beschreibung

### Stand der Technik

Die Erfindung geht von einer Einrichtung nach der Gattung des Hauptanspruchs aus. Bei einer bekannten Einrichtung dieser Gattung (DE-A1 32 44 502) ist das vom Frischluftrohr konzentrisch umgebene Abgasrohr an seiner Unterseite mit einer nach außen abfallenden rinnenartigen Vertiefung versehen, durch welche das im Abgasrohr entstehende Kondenswasser abläuft. Mit dieser Ausbildung des Abgasrohres ist zwar eine stetige Abfuhr des Kondenswassers erreicht, jedoch ist nicht bei allen Witterungsverhältnissen gewährleistet, daß das abtropfende Kondenswasser nicht doch an die Hausfassade gelangt und diese verschmutzt. Diese Gefahr kann insbesondere bei den sogenannten Brennwertgeräten nicht ausgeschlossen werden, bei denen die Abgase im Wärmetausch mit dem zu erhitzenden Fluid bis unter den Taupunkt abgekühlt werden und bei denen daher besonders viel Kondenswasser abgeführt werden muß.

### Aufgabe und Vorteile der Erfindung

Der Erfindung liegt die Aufgabe zugrunde, eine Einrichtung der gattungsmäßigen Art so weiterzubilden, daß eine Verschmutzung der Hausfassade durch im Abgas mitgeführtes bzw. ausfallendes Kondensat mit Sicherheit vermieden wird. Die erfindungsgemäße Anordnung mit den kennzeichnenden Merkmalen des Hauptanspruchs hat den Vorteil, daß das im Abgasrohr sich bildende bzw. mit dem Abgas dorthin gelangende Kondenswasser im Abgasrohr zurückläuft und in die geräteseitige Leitung zum Abführen des Kondenswassers gelangt, so daß es auch bei ungünstigen Witterungsverhältnissen die Hausfassade nicht verschmutzen kann. In der DE-A1 20 23 925 ist zwar eine nach außen ansteigende Schräglage des Abgasrohres in der Zeichnung angedeutet, jedoch nicht beschrieben und wegen Fehlens geräteseitiger Abflußmittel auch nicht zur Kondensatorrückführung genutzt. In dieser Druckschrift ist das Problem der Kondensatrückführung nicht angesprochen.

Durch die in den Unteransprüchen angegebenen Merkmale sind vorteilhafte Weiterbildungen des Gegenstandes des Hauptanspruchs möglich.

Eine einfache Lösung für das Abführen des zurücklaufenden Kondenswassers ergibt sich, wenn der geräteseitige Endabschnitt des Abgasrohrs in eine aus korrosionsfestem Stoff bestehende Buchse eingesteckt ist, an welcher der Anschluß für die Leitung zum Abführen des Kondenswassers vorgesehen ist.

Die Herstellung des Mauerdurchbruchs wird erleichtert, wenn das Abgasrohr in bekannter Weise vom Frischluftrohr umgeben ist und dieses in einen zylindrischen Mantelkörper eingebettet ist, dessen Zylinderachse um den gewünschten Steigungswinkel des Abgasrohrs, vorzugsweise etwa 4°, gegenüber der Längsachse des Abgasrohres geneigt ist. Dadurch ist erreicht, daß trotz der ansteigenden Schräglage des Abgas- und des Frischluftrohrs der Mauerdurchbruch horizontal verlaufen kann.

Der Mantelkörper besteht vorteilhaft aus Polyurethanschaum, welcher auf das Frischluftrohr aufgespritzt ist.

Die lagerichtige Montage der Installationseinheit, aber auch die spätere Installation des Gerätes wird erleichtert, wenn die geräteseitigen Endabschnitte des Abgasrohrs und des Frischluftrohrs mit einem Mauerkasten verbunden sind, der mit einer Montageplatte zur Wandbefestigung vor dem Mauerdurchbruch und an seiner vorderen Stirnseite mit Mitteln zum Befestigen des Gerätes, sowie mit Durchbrüchen zum Übertritt der Frischluft in die Innenkammer des Gerätes und zum Übertritt des Abgases in das Abgasrohr versehen ist.

Nach einem weiteren Vorschlag der Erfindung ist vorgesehen, daß das vom Frischluftrohr umgebene Abgasrohr in einen Ausblasstutzen führt, welcher passend in den benachbarten Mündungsrand des Frischluftrohres eingreift und das Abgasrohr in der vorschriftsmäßigen Lage gegenüber dem Frischluftrohr festhält. Durch die Anordnung eines Ausblasstutzens, der zweckmäßig als Aluminium-Spritzteil ausgebildet wird, ist erreicht, daß das Frischluftrohr und das Abgasrohr an der nach außen weisenden Mündung glatt abgeschnitten sein können, so daß die Rohre auch noch an der Baustelle der Stärke der Installationswand angepaßt werden können.

Der Ausblasstutzen kann vorteilhaft in der Ausblasöffnung ein gegenüber dem Öffnungsrand zurückversetztes Schutzgitter haben, welches das Eindringen von Fremdkörpern in das Abgasrohr verhindert. Das Schutzgitter kann zweckmäßig einstückig an den Ausblasstutzen angespritzt sein, so daß sich ein zusätzliches Bauteil für diesen Zweck und zusätzliche Befestigungsmittel erübrigen. Durch die Anordnung des Schutzgitters allein im Abgasstrom fällt an ihm außerdem nur eine geringe Kondensatmenge an, welche wegen der Zurückversetzung des Schutzgitters in das Abgasrohr zurückfließt.

Um auch bei starker Abgasströmung ein Ausblasen von Kondensat mit Sicherheit zu vermeiden, ist vorteilhaft im Ausblaskanal des Ausblasstutzens im unteren Bereich des Mündungsrandes eine Schwelle vorgesehen.

Das Eindringen von Regenwasser in das Gerät kann ohne zusätzliche Einsätze im Frischluftrohr vermieden werden, wenn am Ausblasstutzen die in den Ringspalt zwischen Frischluftrohr und Abgasrohr führenden Durchbrüche des Ausblasstutzens von angeformten Tropfkanten umgeben sind, unter denen eine nach außen abfallende Tropfrinne gebildet ist.

Eine einfache Befestigung des Ausblasstutzens ergibt sich, wenn dieser an der Stirnseite des Frischluftrohres angeschraubt ist mit Hilfe von Schrauben und Dübeln, die passgerecht in Montageröhrchen stecken, welche am Außenumfang des Frischluftrohres befestigt sind. Die Montageröhrchen können gleichzeitig als Verdrehsicherung des Frischluftrohres im aufgespritzen Mantelkörper dienen.

Die am Frischluftrohr außen befestigen Montageröhrchen können sich vorteilhaft von der einen Stirnseite des Frischluftrohres beginnend mindestens über einen Teil der gesamten Rohrlänge des Frischluftrohres erstrecken, so daß die Dübellöcher am Frischluftrohr auch bei dessen Kürzung und Anpassung an die jeweils vorhandene Mauerstärke erhalten bleiben.

Zeichnung

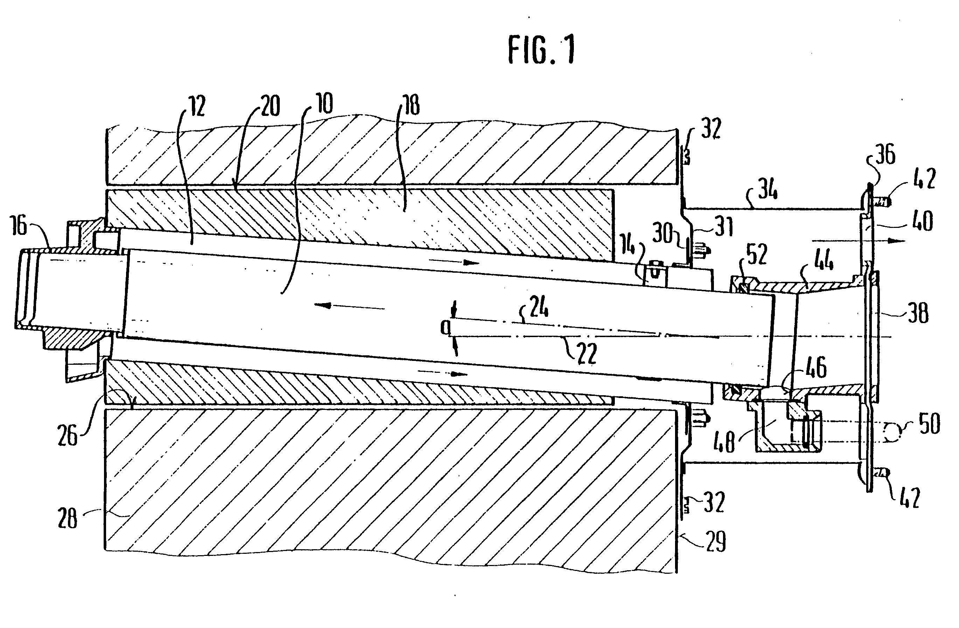

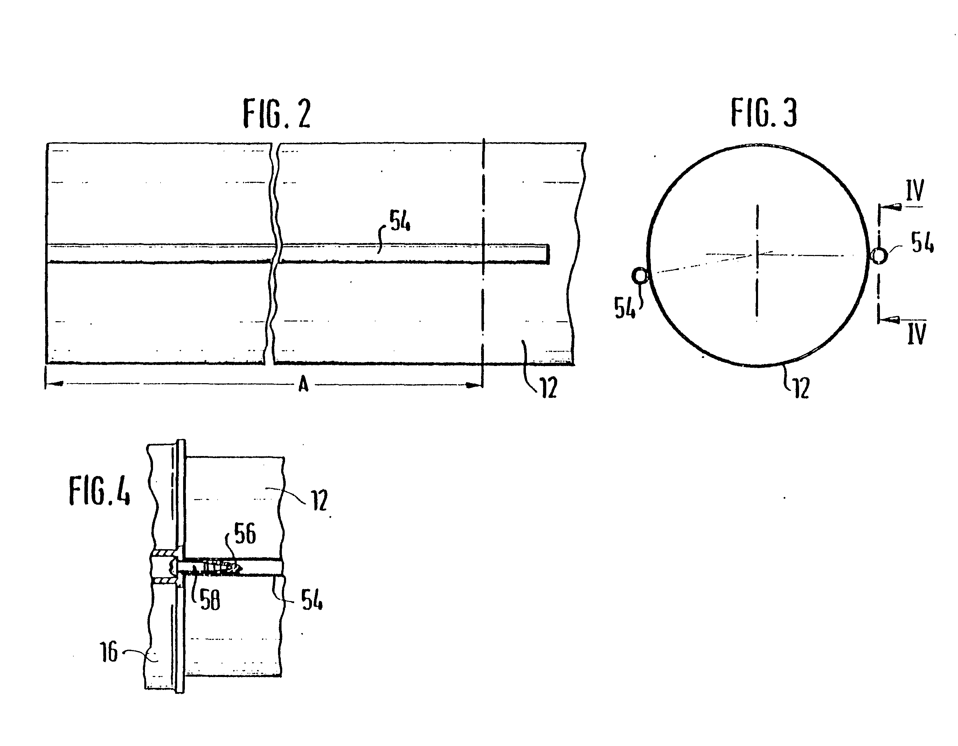

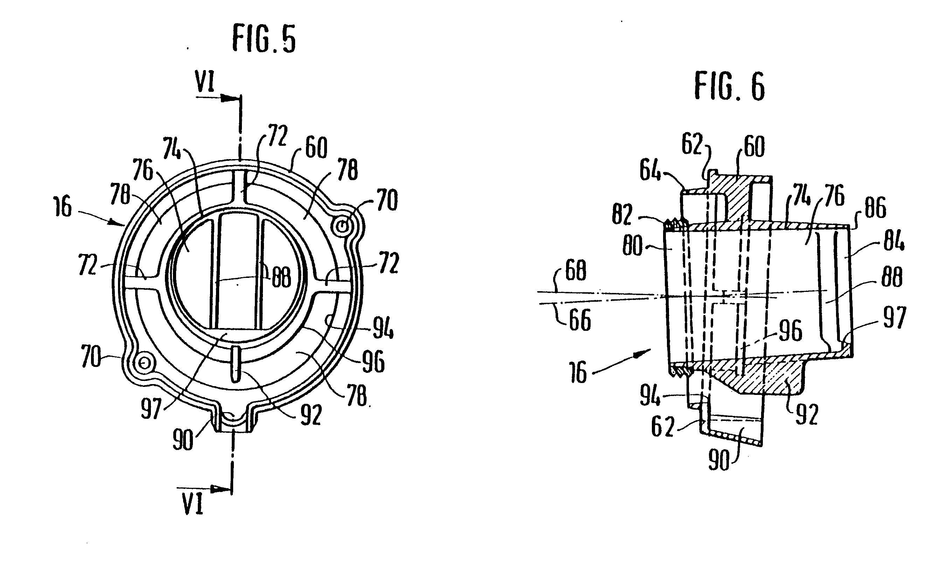

Ein Ausführungsbeispiel der Erfindung ist in der Zeichnung dargestellt und in der nachfolgenden Beschreibung näher erläutert. Es zeigen Figur 1 die Installationseinheit gemäß dem Ausführungsbeispiel im Längsschnitt, Figur 2 eine Seitenansicht des Frischluftrohres der Installationseinheit nach Figur 1, Figur 3 eine Stirnansicht des Frischluftrohrs nach Figur 2 und Figur 4 einen Schnitt nach der Linie IV-IV in Figur 3. In Figur 5 ist eine Stirnansicht des Ausblasstutzens der Installationseinheit nach Figur 1 dargestellt und Figur 6 ist ein Schnitt nach der Linie VI-VI in Figur 5.

Beschreibung des Ausführungsbeispiels

Die Installationseinheit hat ein Abgasrohr 10, welches aus dünnwandigem Material besteht und konzentrisch von einem Frischluftrohr 12 umgeben ist. Das Abgasrohr 10 ist im Frischluftrohr 12 einerseits über Schellen 14 und andererseits über einen Ausblasstutzen 16 gehalten, der nachstehend noch näher beschrieben ist. Das Frischluftrohr 12 ist in einem Mantelkörper 18 eingebettet, der durch Aufspritzen von Polyurethanschaum auf das Frischluftrohr 12 gebildet ist. Der Mantelkörper 18 hat eine zylindrische Mantelwand 20, deren Zylinderachse 22 um einen Winkel a von etwa $4^0$ gegenüber der Längsachse 24 des Abgasrohres 10 und des Frischluftrohres geneigt ist.

Die aus den vorbeschriebenen Teilen gebildete Installationseinheit ist zum Einbau in einen horizontal verlaufenden Durchbruch 26 einer Mauer 28 vorgesehen, an deren Innenseite 29 ein gas- oder ölbeheiztes Gerät installiert werden soll. Durch die horizontale Anordnung des Durchbruchs 26 und den Längswinkelversatz zwischen dem Mantelkörper 18 und dem Abgasrohr 10 ergibt sich bei einer bestimmten Drehwinkelstellung der Installationseinheit eine vorgeschriebene Steigung des Abgasrohres 10 gegenüber der Horizontalen von etwa $4^0$. Das Frischluftrohr 12 ist über einen Ringflansch 30 geräteseitig an eine Montageplatte 31 angeschraubt, welche ihrerseits durch Dübelschrauben 32 an der Mauer 28 befestigbar ist. Für das Bohren der Dübellöcher ist eine Schablone vorgesehen, so daß sich die vorgeschriebene Drehwinkelstellung der Installationseinheit bei deren Befestigen an der Mauer 28 von selbst ergibt.

Die Montageplatte 31 bildet die Rückwand eines Mauerkastens 34, welcher zum Befestigen des Geräts und gleichzeitig zur Abgasabführung in das Abgasrohr 10 und zur Frischluftzuführung in eine geschlossene Innenkammer des Gerätes dient. Der Mauerkasten 34 ist an seiner Vorderseite mit einer Flanschplatte 36 versehen, welche eine zentrale Öffnung 38 und mehrere seitlich davon angeordnete Löcher 40 hat und an welcher mehrere nach vorne abstehende Gewindebolzen 42 befestigt sind. In die zentrale Öffnung 38 ist das eine Ende einer Buchse 44 aus saurebeständigem Stoff eingesetzt, deren anderes Ende mit einem Winkel von etwa $4^0$ nach oben ansteigt. Am Beginn der Steigung ist die Buchse 44 an der tiefsten Stelle mit einer Querbohrung 46 versehen, an die ein Formteil 48 angesetzt ist, welches zum Anschließen einer angedeuteten Leitung 50 zum Abführen des Kondensats dient. In das ansteigende Ende der Buchse 44 ist das Abgasrohr 10 eingesteckt, wobei die Steckverbindung durch einen O-Ring 52 gegen das Innere des Mauerkastens 34 abgedichtet ist.

Das Frischluftrohr 12 ragt an seinem geräteseitigen Ende frei in den Mauerkasten 34 hinein. Am Außenmantel des Frischluftrohrs 12 sind zwei Montageröhrchen 54 achsparallel, jedoch in zwei im Winkel zueinander versetzten Radialebenen befestigt, z. B. angeschweißt. Die Montageröhrchen 54 dienen zum Einstecken von Dübeln 56 für Schrauben 58, mit denen der Ausblasstutzen 16 am Frischluftrohr 12 befestigt ist. Außerdem üben die Montageröhrchen 56 die Funktion einer Verdrehsicherung für das Frischluftrohr 12 im Mantelkörper 18 aus.

Sie sind so lang bemessen daß das Frischluftrohr 12 bei der Montage am Einbauort innerhalb des Längenbereichs A an jede vorhandene Wandstärke angepaßt werden kann, wobei die Dübellöcher stets erhalten bleiben.

Der als Ganzes mit der Bezugszahl 16 bezeichnete Ausblasstutzen hat einen Befestigungsflansch 60, der mit einer umlaufenden Schulter 62 versehen ist, welche an der einen Stirnseite des Mantelkörpers 18 anliegt. Der Befestigungsflansch 60 ist ferner mit einem zylindrischen Kragen 64 versehen, der in das Frischluftrohr 12 eingreift und den Ausblasstutzen 16 gegenüber dem Frischluftrohr 12 zentriert. Die Mittelachse 66 des Kragens 64 ist um $4^0$ gegenüber einer Normalen 68 zur Schulter 62 geneigt, wodurch der Steigung des Frischluftrohrs 12 im Mantelkörper 18 Rechnung getragen ist. Am Befestigungsflansch 60 sind ferner zwei Bohrungen 70 vorgesehen, durch welche die Schrauben 58 zum Befestigen des Ausblasstutzens 16 am Frischluftrohr 12 hindurchgreifen. Durch die unsymmetrische Anordnung der Bohrungen 70 und der Montageröhrchen 54 am Frischluftrohr 12 ist sichergestellt, daß der Ausblasstutzen 16 nur in der vorgeschriebenen Lage montiert werden kann.

Der Befestigungsflansch 60 ist über drei Stege 72 einstückig mit einer Nabe 74 verbunden, welche achsparallel zum Kragen 64 ausgerichtet ist und einen Ausblaskanal 76 enthält. Zwischen den Stegen 72 sind ringsegmentförmige Aussparungen 78 im Ausblasstutzen 16 gebildet, durch welche die Frischluft in den Ringraum zwischen Frischluftrohr 12 und Abgasrohr 10 gelangt. Die Nabe 74 hat einen anströmseitigen Abschnitt 80, der in das Abgasrohr 10 hineinragt und einen Dichtring 82 trägt. In einem abströmseitigen Abschnitt 84 der Nabe 74, welcher über den Befestigungsflansch 60 axial hervorsteht, sind Gitterstäbe 88 zum Schutz gegen Eindringen von Fremdkörpern in das Abgasrohr 10 angebracht. Die Gitterstäbe 88 sind gegenüber dem vorderen Mündungsrand 86 der Nabe 74 zurückversetzt, so daß sie nur vom Abgas bestrichen werden.

Am unteren Rand des Befestigungsflansches 60 ist eine Tropfrinne 90 vorgesehen, über welcher eine Tropfnase 92 der Nabe 74 angeordnet ist. Die Aussparungen 78 für den Durchtritt der Frischluft sind durch Tropfkanten 94 und 96 am Befestigungsflansch 60 bzw. der Nabe 74 begrenzt. Im unteren Bereich des Mündungsrandes 86 ist eine Schwelle 97 im Ausblaskanal 76 vorgesehen.

Das zu installierende Gerät, z. B. ein gasbeheizter Wassererhitzer, wird unter Zwischenlage einer Dichtung von vorn an den Mauerkasten 34 angesetzt, wobei die Gewindebolzen 42 durch Bohrungen in der Rückwand der Innenkammer des Gerätes gelangen, Öffnungen in der Rückwand der Innenkammer den Löchern 40 des Mauerkastens 34 gegenübertreten und sich ein Abgasstutzen des Gerätes, z. B. der Druckstutzen eines Abgasgebläses, in die Buchse 44 schiebt. Gleichzeitig schiebt sich die geräteseitige Leitung 50 in das Formteil 48 ein und bildet mit Hilfe einer O-Ring-Dichtung einen dichten Übergang für die Kondensatableitung. Danach kann das Gerät durch Aufschrauben von Muttern auf die Gewindebolzen 42 am Mauerkasten 34 befestigt werden. Im Betrieb des Gerätes findet ein Wärmeaustausch zwischen dem Abgas und der zuströmenden Frischluft an der Wand des Abgasrohres 10 statt. Das im Abgasrohr ausfallende Kondensat fließt in die Buchse 44 zurück, von wo es über das Formteil 48 in die Leitung 50 und von dort in das Abwasser des Hauses gelangt.

**Patentansprüche**

1. Einrichtung zur Frischluftversorgung und zur Abgasabführung für ein gas- oder ölbeheiztes Heizgerät, wie Wassererhitzer, Lufterhitzer und Heizofen, mit einer in einem Mauerdurchbruch sitzenden Installationseinheit, die mit einem Frischluftrohr und einem Abgasrohr, sowie mit Mitteln zum Befestigen an der Mauer und zum Anschließen des Heizgerätes versehen ist, dadurch gekennzeichnet, daß das Abgasrohr (10) so ausgebildet und/oder gegenüber den die Lage im Mauerdurchbruch (26) bestimmenden Wandflächen (20, 31) der Installationseinheit so festgelegt ist, daß mindestens der geräteseitige Abschnitt des Abgasrohres (10) in Strömungsrichtung des Abgases gesehen ansteigend verläuft, und daß ferner am geräteseitigen Endabschnitt des Abgasrohrs (10) ein Anschluß (48) für eine Leitung (50) zum Abführen des im Abgasrohr (10) anfallenden Kondenswassers vorgesehen ist.

2. Einrichtung nach Anspruch 1, dadurch gekennzeichnet, daß der geräteseitige Endabschnitt des Abgasrohrs (10) in eine aus korrosionsfestem Stoff bestehende Buchse (44) eingesteckt ist, an welcher der Anschluß (48) für die Leitung (50) zum Abführen des Kondenswassers vorgesehen ist.

3. Einrichtung nach Anspruch 1, dadurch gekennzeichnet, daß das Abgasrohr (10) in bekannter Weise vom Frischluftrohr (12) umgeben ist und daß dieses in einen vorzugsweise zylindrischen Mantelkörper (18) eingebettet ist, dessen Längsachse (22) um den gewünschten Steigungswinkel des Abgasrohrs (10), vorzugsweise etwa 4°, gegenüber der Längsachse (24) des Abgasrohrs (19) geneigt ist.

4. Einrichtung nach Anspruch 3, dadurch gekennzeichnet, daß der Mantelkörper (18) auf das Frischluftrohr (12) aufgespritzt ist.

5. Einrichtung nach Anspruch 4, dadurch gekennzeichnet, daß der Mantelkörper (18) aus Polyurethanschaum besteht.

6. Einrichtung nach Anspruch 1, dadurch gekennzeichnet, daß die geräteseitigen Endabschnitte des Abgasrohrs (19) und des Frischluftrohrs (12) mit einem Mauerkasten (34) verbunden sind, der mit einer Montageplatte (31) zur Wandbefestigung vor dem Mauerdurchbruch (26) und an der vorderen Stirnseite mit Mitteln (42) zum Befestigen des Geräts, sowie mit Durchbrüchen (40, 38) zum Übertritt der Frischluft in eine Innenkammer des Geräts und zum Übertritt des Abgases in das Abgasrohr (10) versehen ist.

7. Einrichtung nach den Ansprüchen 2 und 6, dadurch gekennzeichnet, daß die den geräteseitigen Endabschnitt des Abgasrohres (10) aufnehmende Buchse (44) an einer Stirnwand (36) des Mauerkastens (34) befestigt ist.

8. Einrichtung nach Anspruch 1, dadurch gekennzeichnet, daß das vom Frischluftrohr (12) umgebene Abgasrohr (19) in einen Ausblasstutzen (16) führt, welcher passend in den benachbarten Mündungsrand des Frischluftrohres (12) eingreift und das Abgasrohr (10) in der vorschriftsmäßigen Lage gegenüber dem Frischluftrohr (12) festhält.

9. Einrichtung nach Anspruch 8, dadurch gekennzeichnet, daß der Ausblasstutzen (16) in der Ausblasöffnung ein gegenüber dem Mündungsrand (86) zurückversetztes Schutzgitter (88) hat.

10. Einrichtung nach Anspruch 8, dadurch gekennzeichnet, daß im Ausblaskanal (76) des Ausblasstutzens (16) im unteren Bereich des Mündungsrandes (86) eine Schwelle (97) vorgesehen ist.

11. Einrichtung nach Anspruch 8, dadurch gekennzeichnet, daß die in den Ringspalt zwischen Frischluftrohr (12) und Abgasrohr (10) führenden Durchbrüchen (78) des Ausblasstutzens (16) von Tropfkanten (94, 96) umgeben sind, unter denen eine nach außen abfallende Tropfrinne (90) am Ausblasstutzen (16) gebildet ist.

12. Einrichtung, insbesondere nach Anspruch 8, dadurch gekennzeichnet, daß der Ausblasstutzen (16) an der Stirnseite des Frischluftrohres (12) befestigt ist mit Hilfe von Schrauben (58) und Dübeln (56), die passgerecht in Montageröhrchen (54) stecken, welche am Außenumfang des Frischluftrohrs (12) befestigt sind.

13. Einrichtung nach Anspruch 12, dadurch gekennzeichnet, daß sich die Montageröhrchen (54) von der einen Stirnseite des Frischlufrohrs (12) beginnend mindestens über einen Teil (A) der gesamten Rohrlänge des Frischluftrohrs (12) erstrecken.

**Claims**

1. Device for supplying fresh air and for discharging exhaust gas for a gas- or oil-fired heating appliance, such as a water heater, an air heater, and an electric heater, having an installation unit which is mounted in a wall opening and is provided with a fresh-air pipe and an exhaust gas pipe, as well as with means for attachment to the wall and for connecting the heating appliance, characterized in that the exhaust gas pipe (10) is designed such that and/or fixed relative to the wall surfaces (20, 31) of the installation unit which determine the position in the wall opening (26) in such a way that at least the section, near the appliance, of the exhaust gas pipe (10) extends in upward sloping manner as seen in the direction of flow of the exhaust gas, and in that furthermore a connection (48) for a line (50) for discharging the condensation water produced in the exhaust gas pipe (10) is provided at the end section, near the appliance, of the exhaust gas pipe (10).

2. Device according to Claim 1, characterized in that the end section, near the appliance, of the exhaust gas pipe (10) is inserted into a bushing (44) composed of corrosion-resistant material, at which the connection (48) for the line (50) for discharging the condensation water is provided.

3. Device according to Claim 1, characterized in that the exhaust gas pipe (10) is surrounded in known manner by the fresh-air pipe (12), and in that the latter is embedded in a preferably cylindrical jacket body (18), the longitudinal axis (22) of which is inclined by the desired angle of inclination of the exhaust gas pipe (10), preferably about 4° relative to the longitudinal axis (24) of the exhaust gas pipe (19).

4. Device according to Claim 3, characterized in that the jacket body (18) is sprayed onto the fresh-air pipe (12).

5. Device according to Claim 4, characterized in that the jacket body (18) is composed of polyurethane foam.

6. Device according to Claim 1, characterized in that the end sections, near the appliance, of the exhaust gas pipe (19) and of the fresh-air pipe (12) are connected to a wall box (34) which is provided with a mounting plate (31) for wall attachment in front of the opening (26) in the wall, and, at the front end face, with means (42) for securing the appliance, as well as with openings (40, 38) for the passage of the fresh air into an inner chamber of the appliance and for the passage of the exhaust gas into the exhaust gas pipe (10).

7. Device according to Claims 2 and 6, characterized in that the bushing (44) which accommodates the end section, near the appliance, of the exhaust gas pipe (10) is secured on an end wall (36) of the wall box (34).

8. Device according to Claim 1, characterized in that the exhaust gas pipe (19) surrounded by the fresh-air pipe (12) leads into an exhaust nozzle (16) which engages to fit into the adjoining orifice edge of the fresh-air pipe (12) and holds the exhaust gas pipe (10) firmly in the prescribed position relative to the fresh-air pipe (12).

9. Device according to Claim 8, characterized in that, in the exhaust opening, the exhaust nozzle (16) has a protective grille (88) which is set back relative to the orifice edge (86).

10. Device according to Claim 8, characterized in that a sill (97) is provided in the exhaust channel (76) of the exhaust nozzle (16), in the lower region of the orifice edge (86).

11. Device according to Claim 8, characterized in that the openings (78) of the exhaust nozzle (16), said openings leading into the annular gap between the fresh-air pipe (12) and the exhaust gas pipe (10), are surrounded by drip edges (94, 96) under which a drip channel (90) sloping downwards towards the outside is formed.

12. Device, in particular according to Claim 8, characterized in that the exhaust nozzle (16) is secured on the end face of the fresh-air pipe (12) with the aid of screws (58) and plugs (56) which fit exactly into mounting tubes (54) which are fixed on the outer periphery of the fresh-air pipe (12).

13. Device according to Claim 12, characterized in that, starting from the one end face of the fresh-air pipe (12), the mounting tubes (54) extend over at least a part (A) of the total pipe length of the fresh-air pipe (12).

**Revendications**

1. Dispositif d'alimentation en air frais et d'évacuation des gaz d'échappement d'un appareil de chauffage fonctionnant au gaz et aux hydrocarbures, tel qu'un chauffe-eau, un climatiseur et four de chauffage, avec un bloc de mise en place se trouvant un évidement du mur et un tube de fumées ainsi que des moyens de fixation au mur et de raccordement de l'appareil de chauffage, caractérisé en ce que le tube de fumées (10) forme ou est fixé contre la surface de paroi (20, 31) déterminant la position dans l'évidement du mur (26) du bloc de mise en place, de telle sorte qu'au moins la section du tube de fumées du côté de l'appareil s'étend vers le haut en regardant dans la direction de l'écoulement des gaz de fumées, et qu'en outre, sur la section d'extrémité du tube de fumées (10), du côté de l'appareil, il est prévu un raccord (48) pour une canalisation (50) d'évacuation de l'eau de condensation tombant dans le tube de fumées (10).

2. Dispositif selon la revendication 1, caractérisé en ce que la section d'extrémité du tuyau de gaz d'échappement (10) du côté de l'appareil, est insérée dans un manchon (44) constitué d'une matière résistant à la corrosion, sur lequel est prévu le raccord (48) pour la canalisation (50) d'évacuation de l'eau de condensation.

3. Dispositif selon la revendication 1, caractérisé en ce que le tube de fumées (10) est entouré de manière connue en soi du tube d'air frais (12) et qu'il est noyé dans une enveloppe (18) avantageusement cylindrique dont l'axe longitudinal (22) est incliné suivant un angle voulu du tube de fumées (10), avantageusement d'environ 4°, sur l'axe longitudinal du tube de fumées (10).

4. Dispositif selon la revendication 3, caractérisé en ce que l'enveloppe (18) est projetée sur le tuyau d'air frais (12).

5. Dispositif selon la revendication 4, caractérisé en ce que l'enveloppe (18) est constituée de mousse de polyuréthanne.

6. Dispositif selon la revendication 1, caractérisé en ce que les sections d'extrémité du tube de fumées (10) et du tuyau d'air frais (12) sont reliées par un caisson de mur (34) qui est muni d'une plaque de montage (31) pour la fixation de la paroi en avant de l'évidement du mur (26) et sur le côté frontal antérieur avec des moyens (42) de fixation de l'appareil, ainsi que des évidements (40, 38) pour le passage de l'air frais dans une chambre intérieure de l'appareil et pour la sortie des fumées dans le tube de fumées (10).

7. Dispositif selon les revendications 2 et 6, caractérisé en ce que le manchon (44) recevant la section d'extrémité du tube de fumées (10) du côté de l'appareil, est fixé sur une paroi frontale du caisson du mur (34).

8. Dispositif selon la revendication 1, caractérisé en ce que le tube de fumées entouré par le tuyau d'air frais (12) conduit à une colonne de purge (16) qui, de façon appropriée, s'engage sur le rebord de l'embouchure voisin du tuyau d'air frais (12) et maintient le tube de fumées dans la position prescrite par rapport au tuyau d'air frais (12).

9. Dispositif selon la revendication 8, caractérisé en ce que la colonne de purge (16) comporte dans l'ouverture de refoulement, une grille de protection (88) en retrait par rapport au rebord de l'embouchure (86).

10. Dispositif selon la revendication 8, caractérisé en ce que, dans le canal de purge (76) de la colonne de purge (16) est prévu un seuil (97) dans la zone inférieure du rebord de l'embouchure (86).

11. Dispositif selon la revendication 8, caractérisé en ce que les passages (78) de la colonne de purge (16) conduisant dans l'espace annulaire entre le tube de fumées (10) et le tuyau d'air frais (12) sont entourés de rebords d'égouttage (94, 96) sous lesquels est formée une rigole d'égouttage (90) tombant vers l'extérieur.

12. Dispositif en particulier selon la revendication 8, caractérisé en ce que la colonne de purge (16) est fixée sur le côté frontal du tuyau d'air frais (12) au moyen de vis (58) et de chevilles (56) qui s'engagent de façon adaptée dans des tubulures de montage (54) qui sont fixées à la périphérie extérieure du tuyau d'air frais (12).

13. Dispositif selon la revendication 12, caractérisé en ce que les tubulures de montage (54) s'étendent depuis un des côtés frontaux du tuyau d'air frais (12) commençant au moins sur une partie A de la longueur totale du tuyau d'air frais (12).

FIG.1

EP 0 190 394 B1

FIG. 3

FIG. 2

FIG. 4

FIG. 6

FIG.5